Europäisches Patentamt

European Patent Office

Office européen des brevets

(11) Publication number: 0 215 512
A2

## EUROPEAN PATENT APPLICATION

(21) Application number: 86201466.9

(22) Date of filing: 26.08.86

(51) Int. Cl.⁴: B21D 1/14 , G01B 5/00

(30) Priority: 16.09.85 SE 8504268

(43) Date of publication of application:
25.03.87 Bulletin 87/13

(84) Designated Contracting States:
DE FR GB IT

(71) Applicant: AB Samefa
Box 7 Granlidsvägen 4
S-736 00 Kungsör(SE)

(72) Inventor: Bergström, Hans Roar
Blomstervägen 2
S-736 00 Kungsör(SE)

(74) Representative: Nydell, Peder
Nydells Patentbyra Storgatan 57
S-392 31 Kalmar(SE)

(54) A chassis clamp.

(57) A vehicle chassis clamping unit (2) for holding a vehicle chassis firmly in a selected, stationary position relative to a guide beam (3) in an alignment bench, e.g. while measuring and aligning the chassis. The clamping unit includes a post (5) which is provided with a clamping device (6) for attachment to the chassis. The post (5) can be inserted through an elongated channel (7) in the guide beam (3) and also through two plates (8, 9) each of which is located on a respective side of the channel. The vertical and horizontal positions of the post (5) can be adjusted by raising or lowering the post in the channel and by moving the post horizontally therealong.

The post (5) incorporates two outwardly projecting elements (10, 11) which extend transversally to the longitudinal axis of the post and each of which can be tightened against a respective one of the plates (8, 9) in a manner to clamp the clamping unit (2) to the guide beam (3).

FIG. 1

## A Chassis Clamp

### TECHNICAL FIELD

The present invention relates to a vehicle-chassis clamping unit for holding the chassis of a vehicle firmly in a selected position stationary in relation to a guide beam forming part of an alignment bench, e.g. while measuring and aligning the chassis, the clamping unit comprising a post having mounted thereon a clamping device for clamping engagement with the chassis, the post being insertable through an elongated, throughpassing channel in the guide beam and also through two plates, each being located on a respective side of the throughpassing channel and in which unit the axial position of the post can be adjusted by commensurate displacement of the post axially through the plates and the channel, and the horizontal position of the post can be adjusted by moving the post, together with the plates, along the channel at right angles to the longitudinal axis of the post.

### BACKGROUND PRIOR ART

Such chassis clamping units enable positional adjustments to be made to the clamping device of the unit, by displacing the post in its axial direction and/or transversally in relation to the guide beam, so that the clamping device can be clamped against a preselected part of the chassis.

In the case of one such known chassis clamping unit, vide European Patent Specification No. 72 725, the post is in the form of a screw which can be moved in a transverse direction, along the guide beam, and also in the direction of its longitudinal axis, through the channel in the guide beam and also through the two plates. Dis placement of the post in its axial direction is effected by turning the screw or nuts fitted thereto, thereby to raise or lower the clamping device. One serious disadvantage with such known clamping units is that because the clamping unit permits the post carrying the clamping device to rotate, it is quite possible for the post to be rotated unintentionally as a result of the powerful tensile forces applied when aligning the chassis. It will be readily understood that such rotation of the post will also result in rotation of the clamping device and in a change in the vertical height position of said clamping device, thereby seriously impairing the precision of the alignment work.

### SUMMARY OF THE INVENTION

The object of the present invention is therefore to provide a stable chassis clamping unit of the aforesaid kind in which the post cannot be rotated unintentionally while aligning the chassis, but in which the post is displaceable rectilinearly in its axial direction without requiring subsequent adjustment to the position of the clamping device, and with which clamping unit axial movement of the post is possible even when the clamping device is clamped to the chassis.

This object is achieved with the chassis clamping unit according to the invention having the characterizing features set forth in Claim 1.

Further developments of the invention are defined in the depending Claims.

The provision of a post which incorporates two outwardly projecting element each capable of being screwed tightly against a respective plate affords an extremely stable clamping unit, the post of which cannot be rotated or twisted, even in the presence of extremely powerful drawing forces manifested when aligning or straightening the chassis.

When adjusting the clamping unit transversally, one of the screws is loosened sufficienly to enable the unit to slide along the channel in the guide beam. The screw is then tightened, so as to tighten the clamping unit against the guide beam.

When adjusting the post vertically, the lower screw of the two screws provided is loosened and the other screw tightened, whereupon the post is lifted axially through a distance commensurate with the extent to which the screw is tightened. The lower screw re-tightened when the post is in position desired.

When the post is to be lowered, the upper screw is loosened, whereupon the post will drop to a commensurate extent. When the desired position of the post is reached, the bottom screw is tightened.

Since movement of the post is guided rectilinearly by the screws, the angular position of the clamping device will remain constant during axial displacement of the post.

### BRIEF DESCRIPTION OF THE DRAWINGS

The invention will now be described in more detail with reference to the accompanying drawing, which illustrates a preferred embodiment of a chassis clamping unit according to the invention.

Figure 1 is a perspective view of a chassis clamping device according to the invention mounted on a guide beam forming part of an alignment bench.

Figure 2 is a longitudinal sectional view in larger scale of the guide beam and clamping unit illustrated in Figure 1.

Figure 3 is a cross-sectional view taken on the line III-III in Figure 2.

DESCRIPTION OF A PREFERRED EMBODIMENT

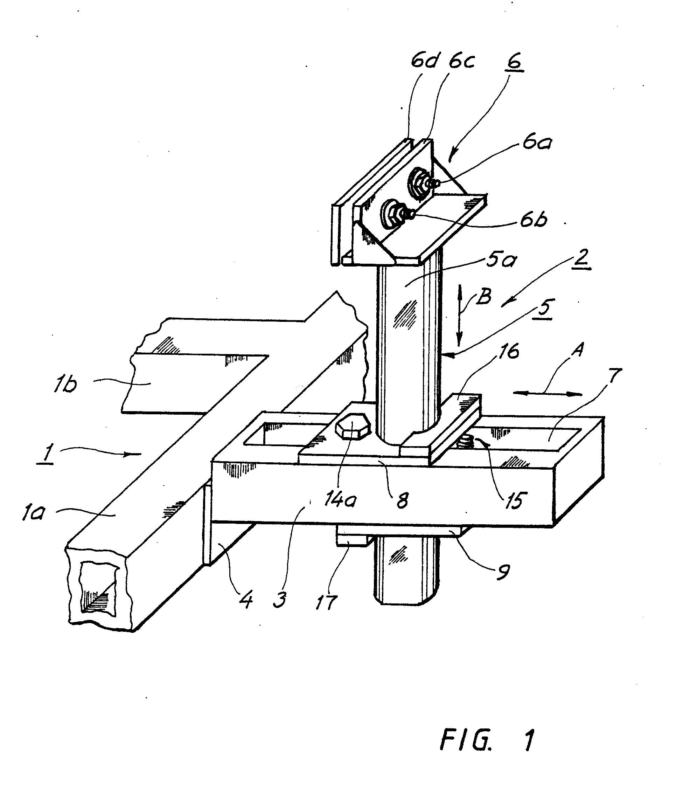

Figure 1 illustrates part of an elongate beam-frame structure 1 in an alignment bench over which a vehicle chassis (not shown) is intended to be clamped with the aid of four chassis clamping units 2 according to the invention (of which clamping units only one is shown in Figure 1).

In order to simplify the drawing, only one part 1a of one long side of the frame is shown, together with part of a cross-beam 1b adjoining the long side. Each long side 1a of the frame structure has extending transversally thereto two horizontal guide beams 3 (of which only one is shown in Figure 1) which are rigidly attached to respective long sides 1a of the frame structure with the aid of individual attachment plates 4, in a manner not shown in detail.

The chassis clamping unit comprises an elongated, cylindrical post 5 which is rigidly connected at its upper end to a conventional clamping device 6 intended to be clamped firmly to a selected part of, for example, a rocker panel on a vehicle chassis to be clamped over the alignment bench. The clamping device 6 comprises, in a known manner, two substantially planar jaw-means 6c and 6d between which the selected part of the chassis is firmly gripped and which can be moved towards and away from one another by means of two screw joints 6a and 6b.

Each guide beams 3 has a centrally located, longitudinally extending and throughpassing rectangular channel 7 through which the post 5 can be inserted so as to form an angle of 90 with the long axis of the guide beam 3.

The diameter of the cylindrical post 5 is greater than the width of the channel 7. Two mutually opposite sides of the post 5 are therefore bevelled to an extent such that the distance between the bevelled post-surfaces corresponds substantially to the width of the channel, while leaving a small clearance. The two bevelled surfaces, of which one, 5a, is shown in Figure 1, thus form guide surfaces for guiding the rectilinear movement of the post 5 through the channel 7.

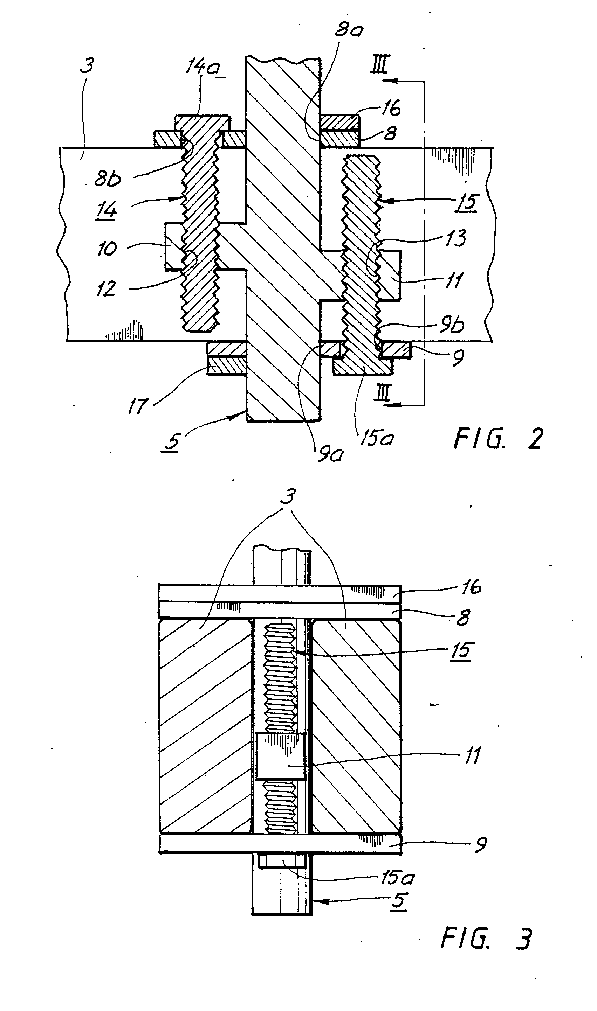

The post 5 also extends through a circular hole 8a and 9a (Figure 2) provided in a respective rectangular support plate 8 and 9 located on opposite sides of the channel 7.

The cylindrical part of the post 5 has extending at right angles to the longitudinal axis thereof two outwardly extending elements between the plates 8 and 9, the elements being in the form of parallelipepedic arms 10 and 11, which are diametrically opposed to one another and offset mutually in the direction of said axis. Each of the arms has provided therein a respective screw-threaded hole 12 and 13 which extends parallel with the longitudinal axis of the post 5.

The head 14a of a screw or bolt 14 rests on the outer surface of the plate 8 and the screw extends through a plain hole 8b in the plate 8 into screw engagement with the hole 12 in the arm 10. Correspondingly, the head 15a of a screw or bolt 15 rests on the outer surface of the plate 9, with the screw extending through a plain hole 9b in the plate 9 into screw engagement with the hole 13 in the arm 11.

In order to increase the stability of the support plates 8 and 9, the ends thereof remote from respective screw heads 14a, 15a are reinforced with additional plate-elements 16 and 17 respectively, which are welded to said ends and the one edge of which follows and abuts the cylindrical surface of the post 5.

The illustrated chassis clamping unit 2 is shown in its active clamping position. If it is necessary to move the clamping unit along the guide beam 3, i.e. in a horisontal direction as indicated by the arrow A in Figure 1, one of the screws 14, 15 is loosened so that the clamping device can be displaced along the guide beam or slide 3 in the channel 7.

If the clamping unit, or more correctly its clamping device 6, needs to be raised vertically, as shown by the arrow B in Figure 1, the lower screw 15 is loosened and the upper screw 14 tightened, whereupon the post 5 and the clamping device 6 carried thereby will be lifted to an extent commensurate with the tightening of screw 14. The lower screw is then re-tightened, when the clamping device 6 has been located in the desired position.

When wishing to lower the clamping device, it is only necessary to back-off the upper screw 14 to the required extent, i.e. without loosening the lower screw 15, whereupon the post 5 is lowered commensurately, together with the screw 15, whereupon the post 5 is lowered commensurately, together with screw 15. The screw is then tightened once the clamping device 6 has been located in the desired position.

According to an alternative embodiment, not shown, the arms 10 and 11 are arranged externally of the plates 8 and 9, i.e. one arm is located at a distance above the plate 8 and the other at a distance beneath the plate 9. In this case the screw-thread engagement between the screws 14, 15 and respective arm 10, 11 is replaced with a screw-thread engagement between the screws and respective holes 8b, 9b in plates 8 and 9.

**Claims**

1. A chassis clamping unit (2) for holding a vehicle chassis firmly in a selected position relative to a guide beam (3) in an alignment bench, e.g. while measuring and aligning the vehicle chassis, the clamping unit comprising a post (5) which is provided with a clamping device (6) for clamping engagement with the chassis and which can be inserted through an elongated, throughpassing channel (7) provided in the guide beam (3) and also through two perforated plates (8, 9) each of which is located on a respective side of the throughpassing channel, said post being positionable in the direction of its longitudinal axis (B) by moving the post axially through the plates and through the channel, and also positionable in a transversal direction by moving the post, together with the plates, along said channel, **characterized** in that the post (5) incorporates two outwardly projecting elements (10, 11) each of which can be clamped firmly against a respective one of said plates (8, 9) by means of a screw means (14, 15) in a manner to clamp the clamping unit (2) firmly to the guide beam (3), this clamping facility of the two outwardly projecting elements (10, 11) against their respective plates fulfilling the dual purpose of locking the post in a vertical position of adjustment and of locking the clamping unit in a selected position along the guide beam (3).

2. A chassis clamping unit according to Claim 1, **characterized** in that each of the two screw means (14, 15) is in screw-thread engagement with a respective one of said outwardly projecting elements (10, 11).

3. A chassis clamping unit according to Claim 1, **characterized** in that each of the two screw means (14, 15) is in screw-thread engagement with a respective one of said plates (8, 9).

4. A chassis clamping unit according to any of the preceding Claims, **characterized** in that the post (5) is guided for rectilinear movement when moved axially through the channel (7) in the guide beam (3).

5. A chassis clamping unit according to Claim 4, **characterized** in that said rectilinear guidance of the axial movement of the post is effected with the aid of at least one guide surface (5a) on the post (5), this surface being intended to slide rectilinearly against a wall surface of the channel (7) upon axial movement of the post therein.

6. A chassis clamping device according to Claim 2, **characterized** in that the two outwardly projecting elements (10, 11) are located between the plates (8, 9).

FIG. 1

FIG. 2

FIG. 3